# FASCICULE DE BREVET EUROPEEN

(11) **EP 0 868 239 B1**
(45) Date de publication et mention de la délivrance du brevet: **01.03.2000**
(21) Numéro de dépôt: 96942427.4
(22) Date de dépôt: 18.12.1996
(51) Int. Cl.: B22D 11/06, F28F 5/02, F16C 13/00

(54) **DISPOSITIF TOURNANT DE COULEE CONTINUE**
STRANGGIESSDREHVORRICHTUNG
ROTARY CONTINUOUS CASTING DEVICE

(30) Priorité: 21.12.1995 FR 9515305
(43) Date de publication de la demande: 07.10.1998
(73) Titulaire: USINOR, 92800 Puteaux (FR); Thyssen Stahl Aktiengesellschaft, 47166 Duisburg (DE)
(72) Inventeur: MOREL, Michel, F-77500 Chelles (FR); DELASSUS, Pierre, F-62400 Béthune (FR); RAISSON, Gérard, F-58000 Nevers (FR)
(74) Mandataire: Le Brusque, Maurice
(86) Numéro de dépôt international: FR9602025
(87) Numéro de publication internationale: WO9723318

(56) Documents cités:
- EP-A- 0 237 008
- DE-A- 3 801 085
- DE-A- 4 227 987
- DE-C- 4 202 373
- DE-U- 9 306 449
- FR-A- 2 572 313
- IRON AND STEEL ENGINEER, vol. 69, no. 4, 1 Avril 1992, pages 74-77, XP000278762 MOREL M ET AL: "SHAPEROLL ACTUATOR-RESULTS OF HOT AND COLD MILL APPLICATIONS"

## Description

L'invention a pour objet un dispositif tournant pour la coulée en continu de métal liquide, utilisable spécialement pour la production en continu de brames minces ou de bandes d'un métal ferreux ou non-ferreux.

La coulée en continu de l'acier ou autre métal s'effectue, de façon classique, dans un moule à parois refroidies énergiquement, au contact desquelles le métal coulé se solidifie en surface pour constituer un produit limité par une croûte durcie entourant un coeur liquide ou pâteux et, de section transversale identique à celle du moule. Ce produit est extrait du moule à une certaine vitesse et est ensuite pris en charge par des dispositifs de guidage munis de moyens de refroidissement jusqu'à solidification complète. On peut ainsi réaliser des produits de diverses sections, tels que des barres ou des brames, ayant une largeur beaucoup plus grande que leur épaisseur.

Les installations de coulée continue classiques utilisant, notamment, une lingotière oscillante sont prévues pour réaliser des brames dont l'épaisseur ne descend pas, normalement, au-dessous de 80 à 100 mm. Il est, donc, normalement nécessaire d'utiliser des machines spéciales pour la réalisation de brames minces d'épaisseur inférieure à 80 mm.

Mais on s'efforce, depuis quelques années, de réaliser en continu des produits encore plus minces constituant de simples bandes dont l'épaisseur peut descendre, dans certains cas jusqu'à 1 mm environ.

A cet effet, on peut utiliser avantageusement des machines tournantes comprenant au moins un tambour entraîné en rotation autour de son axe et limité par une paroi cylindrique refroidie le long de laquelle, le métal coulé se solidifie pour former une bande qui est ensuite décollée du tambour (EP-A-237008).

Mais une telle disposition n'est utilisée, en pratique, que pour la coulée de métaux amorphes ou à température de fusion relativement peu élevée.

Dans une autre disposition connue, on utilise deux cylindres à axes horizontaux, placés en vis à vis de façon à limiter un entrefer ayant la largeur que l'on souhaite donner à la bande. Le métal est coulé dans l'espace compris entre les deux cylindres et présentant une section transversale globalement en V, qui se rétrécit progressivement jusqu'à un entrefer de sortie dont la largeur correspond à la distance entre les deux cylindres, l'espace de coulée étant limité, dans le sens axial, par des plaques d'extrémité appliquées de façon relativement étanche sur les deux cylindres.

Chaque cylindre est refroidi énergiquement par circulation d'eau et le métal coulé se solidifie le long de la périphérie des deux cylindres qui sont entraînés en rotation en sens contraire, de façon à former un produit solidifié au moins superficiellement, qui est évacué vers des moyens de guidage et de refroidissement secondaire placés au-dessous des deux cylindres et dans lesquels s'achèvent la solidification et le refroidissement.

Dans une disposition connue décrite, par exemple, par le document DE-A-3801085, la paroi cylindrique sur laquelle le métal est coulé constitue un tambour porté par deux paliers définissant un axe de rotation du tambour et à l'intérieur duquel est placé un noyau fixe limité par une face circulaire séparée de la face interne du tambour par un espace annulaire dans lequel est mis en circulation un fluide de refroidissement. A cet effet, le noyau fixe est muni de deux chambres, respectivement, d'alimentation et d'évacuation, débouchant de part et d'autre d'un joint d'étanchéité qui s'étend, le long d'une génératrice, entre la paroi tournante et le noyau fixe. Le fluide de refroidissement introduit par la chambre d'alimentation pénètre dans l'espace annulaire et tourne autour du noyau, jusqu'au joint d'étanchéité pour sortir par la chambre d'évacuation.

Pour assurer la répartition du fluide sur toute la surface du tambour, des rainures de circulation sont ménagées sur la face interne de la paroi cylindrique qui doit donc être relativement épaisse.

De plus, l'ensemble du tambour doit être assez rigide pour garantir le centrage de la paroi cylindrique sur l'axe de rotation autour du noyau fixe.

Or, la face externe de la paroi cylindrique sur laquelle est coulé le métal liquide se trouve à une température très supérieure à celle de la face interne le long de laquelle circule le fluide de refroidissement. Il en résulte des effets de déformation thermique relativement importants, dus aux dilatations différentielles. En pratique, la face externe de la paroi a tendance à se bomber et, dans le cas où l'on utilise deux cylindres en vis à vis, l'entrefer de sortie du métal est plus étroit dans sa partie centrale que sur les bords.

Il est difficile de combattre ces effets de dilatation et les moyens que l'on pourrait employer à cet effet peuvent avoir une influence négative sur les conditions de solidification et, par conséquent, la qualité métallurgique du produit fini. En outre, les résultats obtenus restent souvent aléatoires.

L'invention a pour objet de remédier à ces inconvénients grâce à une disposition nouvelle qui permet notamment, par des moyens simples et d'entretien facile, de compenser efficacement les dilations différentielles et les déformations et d'améliorer la qualité du produit coulé.

L'invention concerne donc, d'une façon générale, un dispositif tournant pour la production d'un produit plat, par coulée d'un métal liquide sur au moins un moule rotatif, entraîné en rotation autour d'un axe et limité par une paroi cylindrique de révolution autour dudit axe, ayant une face externe et une face interne et entourant un noyau fixe limité par une face circulaire centrée sur l'axe et associé à des moyens de mise en circulation d'un fluide de refroidissement entre la face interne de la paroi et la face circulaire du noyau, le métal liquide se refroidissant le long d'un secteur angulaire de la face externe de la paroi cylindrique tournante, pour la formation d'un produit plat solidifié au moins superficiellement et s'écartant de la paroi refroidie suivant une direction d'extraction.

Conformément à l'invention, la paroi refroidie sur laquelle est coulé le métal est constituée d'une enveloppe cylindrique mince formant une coquille simplement enfilée sur la face circulaire du noyau fixe qui constitue par la partie centrale d'un arbre fixe de maintien et de centrage de ladite coquille, ladite face circulaire ayant un rayon sensiblement égal, au jeu de montage près, à celui de la face interne de la paroi refroidie et couvrant un secteur angulaire correspondant au moins au secteur angulaire de la coquille sur lequel se refroidit le métal, et ledit arbre fixe est associé à des moyens d'application d'un effort de poussée sur la face interne de la coquille, suivant une direction opposée au secteur de refroidissement du métal pour l'application de la coquille sur ladite face circulaire de l'arbre, avec interposition d'une couche de fluide de refroidissement, de façon à constituer un coussinet fixe pour le centrage de la coquille sur l'arbre, le fluide de refroidissement assurant la lubrification dudit coussinet.

Dans un mode de réalisation préférentiel, le moyen d'application d'un effort de poussée sur la coquille est constitué d'au moins un patin ayant une face externe couvrant un secteur circulaire de rayon sensiblement égal à celui de la face interne de la coquille et opposé à la face circulaire de l'arbre, et ledit patin est monté coulissant sur l'arbre suivant une direction passant par l'axe et est associé à au moins un moyen de poussée tel qu'un vérin prenant appui d'un côté sur l'arbre et de l'autre sur le patin pour repousser ce dernier du côté opposé à la face circulaire de l'arbre sur laquelle est appliquée la coquille, une couche de fluide de refroidissement étant interposée entre la face interne de la coquille et la face externe du patin qui constitue ainsi un coussinet mobile radialement , coopérant avec le coussinet fixe constitué par la face circulaire de l'arbre fixe pour le centrage de la coquille.

Selon une autre caractéristique essentielle, le dispositif comprend des moyens de réglage de l'effort exercé par chaque vérin sur le patin correspondant de façon à déterminer un effort d'application de la coquille sur l'arbre susceptible de compenser la déformation de la coquille due aux dilatations différentielles entre la face interne et la face externe de celle-ci.

De préférence, on utilise, à cet effet, au moins deux patins placés l'un à côté de l'autre sur la longueur de la coquille et associés à des moyens séparés de réglage individuel de l'effort de poussée exercé par chacun des patins sur la partie correspondante de la coquille.

Par ailleurs, chaque face d'application formant coussinet est munie d'une part, d'une pluralité d'orifices répartis sur la dite face et reliés à au moins un circuit d'alimentation en fluide sous pression ménagé à l'intérieur de l'arbre fixe et, d'autre part, de moyens de récupération du fluide tel que des orifices répartis sur la face d'application et reliés, individuellement ou par groupe à au moins un circuit d'évacuation ménagé à l'intérieur de l'arbre fixe.

De façon avantageuse, les orifices d'alimentation en fluide et les moyens de récupération sont disposés, respectivement, en plusieurs zones réparties sur la largeur de la coquille et distribuées de telle sorte que la circulation du fluide entre chaque orifice d'alimentation et un moyen de récupération correspondant assure un refroidissement uniforme de la coquille le long de la face d'application. Par ailleurs, les orifices d'alimentation de chaque zone sont avantageusement reliés à un circuit d'alimentation séparé muni d'un moyen de réglage individuel de la pression du fluide à la sortie dudit circuit.

Dans un mode de réalisation préférentiel, les moyens de récupération ménagés sur chaque face d'application formant un coussinet de la coquille comprennent au moins une rainure couvrant au moins un secteur dudit coussinet et dans laquelle débouche au moins un orifice d'évacuation relié par un canal à un circuit d'évacuation du fluide ménagé à l'intérieur de l'arbre fixe.

Selon une autre caractéristique essentielle, la partie centrale de l'arbre fixe sur laquelle est ménagée la face circulaire d'application de la coquille est munie d'un évidement à l'intérieur duquel est logé au moins un patin d'application de la coquille, cet évidement étant limité, dans le sens axial, par deux flasques latéraux de maintien du patin et, du côté de l'axe de l'arbre, par une face plane dans laquelle est ménagée au moins une partie en saillie qui s'enfile dans un alésage correspondant du patin, ladite partie en saillie et l'alésage correspondant constituant, respectivement, le piston et le corps d'un vérin de poussée du patin.

Il faut noter que la face d'application fixe ménagée sur l'arbre du côté de la coulée peut avantageusement présenter un profil non rigoureusement cylindrique, susceptible de compenser la déformation prévisible de la coquille en service.

Etant donné que la coquille est montée rotative sur un arbre fixe, il est possible de placer à l'intérieur de celui-ci non seulement les circuits d'alimentation et d'évacuation du fluide de refroidissement mais également tous dispositifs utiles tels que des moyens de brassage du métal, électromagnétiques ou par ultrasons qui peuvent être logés à l'intérieur de l'arbre fixe.

Par ailleurs, la coquille est maintenue axialement, à ses deux extrémités latérales, par deux flasques circulaires montés rotatifs sur l'arbre fixe chacun par l'intermédiaire d'un palier et munis de joints d'étanchéité coopérant avec des parties correspondantes de l'arbre fixe.

Cette disposition permet l'entraînement en rotation de la coquille qui est solidarisée en rotation avec au moins l'un des flasques d'extrémité par des moyens permettant les dilatations différentielles, ledit flasque étant relié cinématiquement à un moyen de commande de rotation porté par l'arbre.

Mais l'invention sera mieux comprise par la description suivante d'un mode de réalisation particulier, donné à titre d'exemple et représenté sur les dessins annexés.

La figure 1 est une vue schématique d'une machine de coulée à cylindres tournants.

La figure 2 est une vue en coupe axiale de l'ensemble d'un cylindre tournant selon l'invention.

La figure 3 et la figure 4 sont des vues en coupe transversale respectivement selon la ligne III-III et la ligne IV-IV de la figure 2.

La figure 5 est une vue de dessous selon la flèche F1 de la figure 3, la coquille étant enlevée.

La figure 6 est une vue de dessus selon la flèche F2 de la figure 4, la coquille étant enlevée.

La figure 7 est une vue en coupe axiale selon la ligne VII-VII de la figure 4.

La figure 8 est une vue partielle en coupe axiale selon la ligne VIII-VIII de la figure 3.

La figure 9 est une vue de détail en coupe axiale selon la ligne IX-IX de la figure 3.

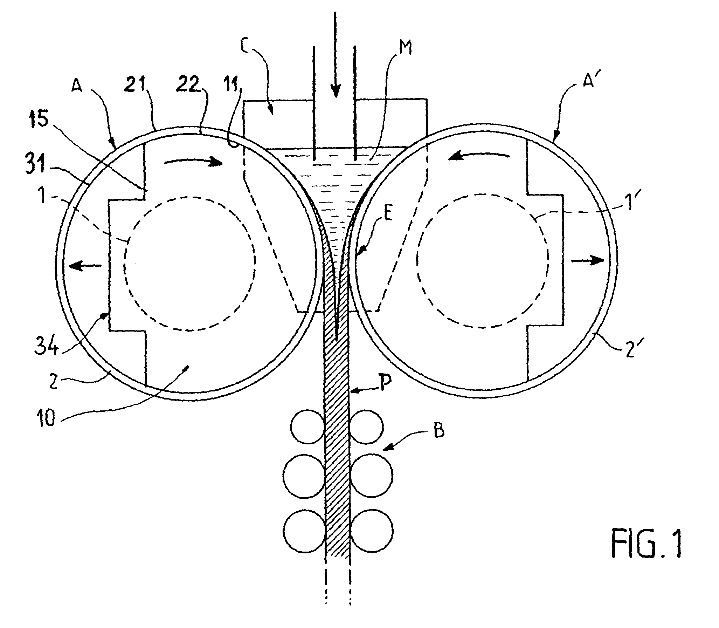

Sur la figure 1 on a représenté schématiquement une machine de coulée à cylindres tournants comprenant deux cylindres A, A' entraînés en rotation en sens contraire et limitant un espace à section en V dans lequel est coulé un métal liquide M. Cet espace de coulée est limité latéralement par des cloisons C appliquées sur les côtés des cylindres A, A' sous une pression juste suffisante pour assurer l'étanchéité sans gêner la rotation.

La paroi externe de chaque cylindre A, A' est refroidie énergiquement par circulation de fluide, et il se forme ainsi, le long des deux cylindres A, A' deux croûtes solidifiées convergeant l'une vers l'autre de façon à limiter un produit P ayant une épaisseur égale à la largeur de l'entrefer E et dont le coeur peut être liquide, la solidification complète étant réalisée dans un dispositif B d'extraction et de refroidissement secondaire.

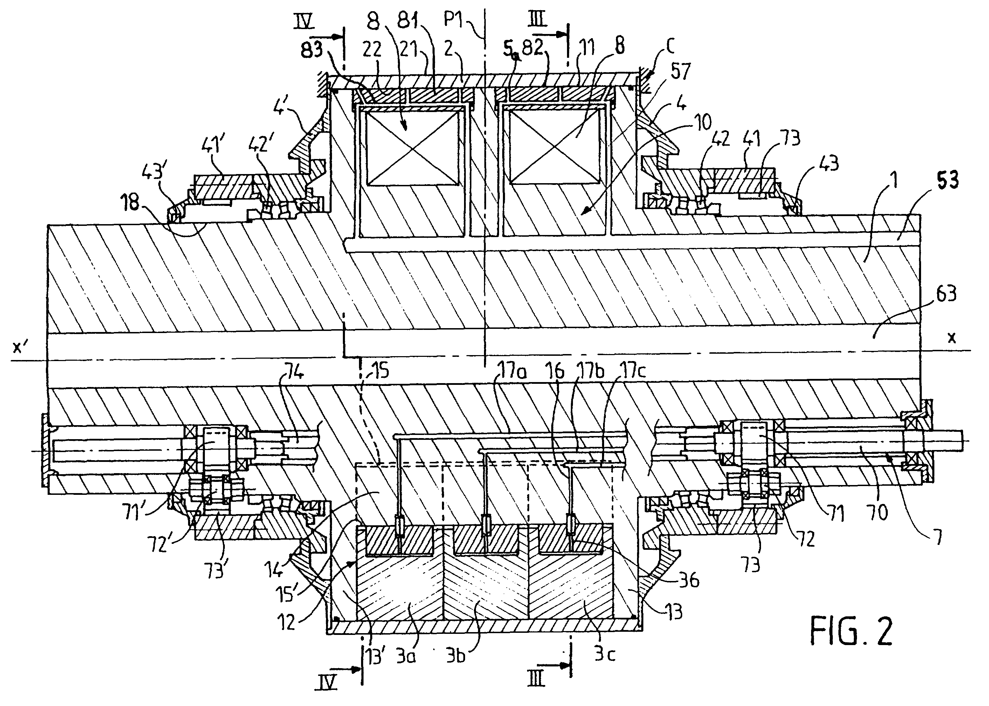

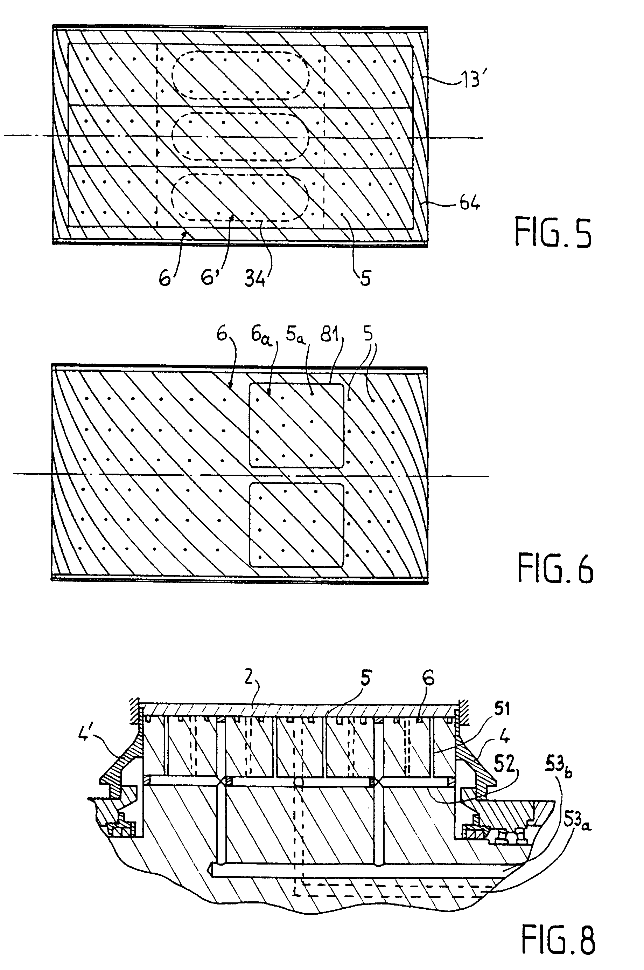

L'invention se rapporte à la réalisation, d'un cylindre tournant tel que représenté sur les figures 2 à 11. Une machine de coulée du type représenté sur la figure 1 pourra donc être constituée de deux cylindres selon l'invention.

Comme l'indique schématiquement la figure 1, chaque cylindre de coulée A, A' est constitué d'une enveloppe cylindrique mince, ayant une face externe 21 et une face interne 22 et constituant une coquille 2 enfilée sur un noyau 10 limité par une face circulaire cylindrique 11 ayant un rayon sensiblement égal, au jeu de montage près, à celui de la face interne 22 de la coquille 2.

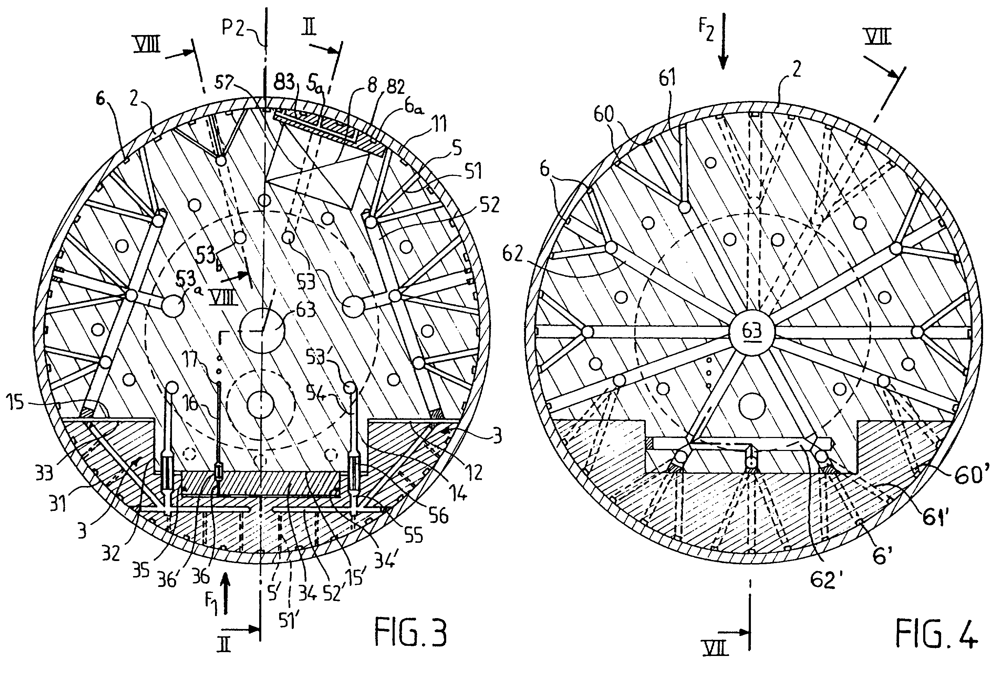

Comme on le voit notamment sur la figure 2 qui représente l'ensemble du dispositif, en coupe axiale selon la ligne II-II de la figure 3, le noyau 10 constitue la partie centrale élargie d'un arbre fixe 1 de maintien et de centrage de la coquille 2, cette dernière étant simplement enfilée sur la face cylindrique 11 et maintenue axialement, avec possibilité de jeu radial, par deux flasques circulaires 4, 4' montés rotatifs sur l'arbre 1, de part et d'autre de la partie élargie 10, par l'intermédiaire de paliers 42, 42'.

La face externe circulaire 11 de l'arbre 1 couvre un secteur cylindrique de révolution d'au moins 180°, centré sur l'axe x'x de la coquille 2 et est prolongée par une face circulaire 31 ménagée sur un patin mobile 3 associé à l'arbre 1. La face circulaire 31 a également un diamètre sensiblement égal, au jeu de montage près, à celui de la face interne 22 de la coquille et couvre, de préférence, le secteur complémentaire de la périphérie de telle sorte que la partie élargie 10 forme avec le patin 3, après le montage, un cylindre complet sur lequel est enfilée la coquille 2 dont l'axe x'x coïncide avec celui dudit cylindre 11, 31.

De préférence, comme le montre la figure 2, la partie élargie 10 de l'arbre 1 est munie, sur le côté opposé au secteur de coulée, d'un évidement transversal 12 centré dans un plan médian P1 perpendiculaire à l'axe x'x et couvrant une longueur un peu inférieure à celle de la partie élargie 10 de façon à laisser deux flasques latéraux circulaires 13, 13' aux extrémités de celle-ci. De plus, le fond de l'évidement 12 a un profil en créneau comportant une partie centrale en saillie 14 encadrée par deux méplats 15, comme le montrent les figures 3 et 4.

A l'intérieur de l'évidement 12 qui est fermé extérieurement, par la coquille 2, est placé au moins un patin 3 ayant en section transversale, la forme générale d'un croissant limité d'un côté par une face externe 31 de rayon égal à celui de la face cylindrique 11 de la partie élargie 10, et de l'autre par une face interne 32 ayant un profil en créneau conjugué à celui du fond de l'évidement 12 et comprenant une rainure 32 formant un logement dans lequel peut s'engager la partie en saillie 14 et deux faces latérales 33 placées respectivement en vis à vis des méplats 15 de la partie élargie 10.

Dans le mode de réalisation préférentiel représenté sur les figures, on utilise plusieurs patins accolés, par exemple trois patins 3a, 3b, 3c de façon à répartir les efforts appliqués, de la façon indiquée plus loin.

Au montage, on peut donc placer sur la partie en saillie 14, les trois patins 3a, 3b, 3c, qui occupent l'évidement 12 entre les deux flasques 4, 4', puis enfiler la coquille 2 sur l'ensemble. Les patins 3 sont ainsi maintenus à l'intérieur de l'évidement 12, dans le sens axial par les flasques 13, 13', dans le sens radial par la coquille 2 et le fond 15 de l'évidement et dans le sens transversal à l'axe par la partie en saillie 14, les patins étant ainsi centrés sur le plan longitudinal P2 passant par l'axe x'x de l'arbre.

Par ailleurs, la position radiale de chaque patin 3 par rapport à l'axe x'x peut être réglée grâce à au moins un vérin interposé entre chaque patin 3 et l'arbre 1 et comprenant un piston 34 prenant appui sur la face d'extrémité 15' de la partie en saillie 14 et s'engageant dans un alésage correspondant 35 ménagé dans le fond de l'évidement 32 du patin 3.

Ce dernier a une forme rectangulaire allongée, en particulier si l'on utilise plusieurs patins et il est particulièrement avantageux d'associer chaque patin 3a, 3b, 3c à un vérin unique de section oblongue couvrant pratiquement toute la surface du fond 32 de la rainure mais ayant des extrémités demi-circulaires, comme on l'a représenté sur les figures. Toutefois, on pourrait aussi utiliser plusieurs vérins à section circulaire, placés l'un à côté de l'autre.

Dans le mode de réalisation préférentiel représenté sur les figures, le piston 34 est une plaque indépendante logée dans l'alésage 35 et qui prend simplement appui sur la face d'extrémité 15', un joint périphérique 34' assurant l'étanchéité de la chambre de vérin ainsi constituée. Celle-ci peut être alimentée en huile par un canal 36 traversant la plaque 34 et relié par un joint souple 36' à l'extrémité d'un canal 16 percé dans la partie en saillie 14 et débouchant dans un conduit d'alimentation 17.

Comme on le voit sur la figure 2, chacun des patins 3a, 3b, 3c est associé à un vérin alimenté par un circuit séparé 17a, 17b, 17c de telle sorte qu'il est possible d'agir individuellement sur la position radiale de chacun des trois patins.

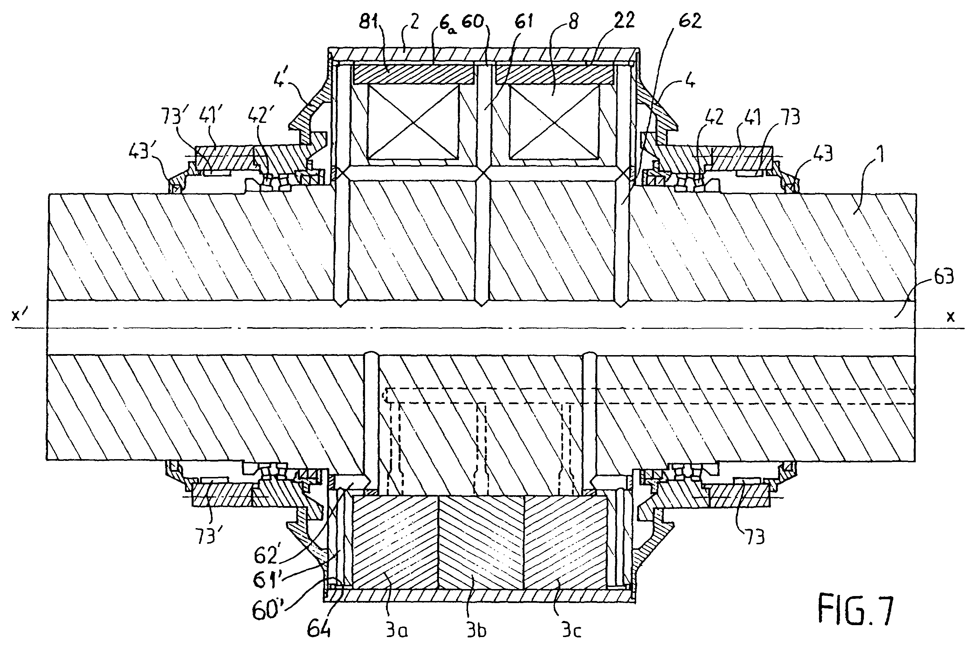

Comme on l'a indiqué plus haut, l'arbre 1 est fixe en rotation et la coquille 2 est montée rotative autour de l'arbre en glissant sur la portée cylindrique 11 ménagée sur la périphérie de la partie élargie 10 et prolongée par les faces externes 31 des trois patins 3a, 3b, 3c. A cet effet, comme le montrent les figures 2 et 7, la coquille 2 est entraînée en rotation par deux flasques circulaires 4, 4' fixés respectivement sur deux bagues 41, 41' montées rotatives, par l'intermédiaire de paliers à roulement 42, 42' et de butées axiales 43, 43' sur des portées cylindriques 18 ménagées de part et d'autre de la partie élargie 11 de l'arbre 1 et centrées sur l'axe x'x de celui-ci.

Les flasques 4, 4' sont entraînés en rotation de la façon décrite plus loin.

Pour permettre le glissement sans frottement de la coquille 2, il est nécessaire d'interposer un film de fluide lubrifiant entre la face interne 22 de celle-ci et la portée cylindrique 11, 31, fixe en rotation. De la sorte, la coquille 2 tourne sur au moins deux coussinets constitués respectivement par les faces cylindriques 11 de l'arbre 1 et 31 des patins 3.

Comme le montre la figure 1, dans le cas où l'on utilise deux cylindres tournants A, A' selon l'invention, le plan médian P2 dans lequel sont centrés les patins est un plan horizontal passant par les axes des deux cylindres A, A'.

Les patins sont donc tournés du côté opposé au métal liquide et le secteur de la coquille 2 tourné vers la cavité de coulée est appliqué sur la face 11 par l'effort exercé de l'autre côté de l'arbre 1 par les patins 3 sous l'action des vérins 34.

Il en résulte que le profil de la coquille 2 dans la partie au contact du métal est déterminé par celui de la face 11 et ne risque pas de se déformer sous l'effet des dilatations.

En outre, selon une autre caractéristique essentielle de l'invention, le fluide de lubrification peut aussi assurer le refroidissement de la coquille.

La nature et les caractéristiques de ce fluide seront donc choisies de façon à assurer les deux fonctions de lubrification et de refroidissement. Cependant, il est particulièrement économique et avantageux d'utiliser à cet effet de l'eau.

Ce fluide est introduit entre les faces en regard 22 et 11, par l'intermédiaire d'un grand nombre d'orifices 5 régulièrement répartis sur toute la surface de la face d'application 11 et placés au débouché de canaux 51 disposés en faisceaux et reliés par groupes à des collecteurs 52 débouchant eux-mêmes dans des conduits d'alimentation 53 parallèles à l'axe x'x de l'arbre 1.

Comme le montrent les figures 3 à 6, les orifices 5 peuvent être disposés, en carré ou en quinconce, sur des rangées parallèles à l'axe x'x et ces rangées sont reliées par groupes aux différents collecteurs 52. Chaque collecteur 52 couvre ainsi une zone déterminée de l'arbre 1 et les conduits correspondants 53 peuvent être alimentés sous des pressions et des débits adaptés à la position du secteur correspondant de l'arbre, en fonction des conditions de coulée.

Les différentes canalisations 51, 52, 53 sont percées à l'intérieur de l'arbre fixe 1 et de la partie élargie 10 et sont réparties d'une façon permettant de ne pas affaiblir la résistance mécanique de l'ensemble, par exemple de la façon représentée sur les figures 2 et 7.

La face externe 31 de chaque patin 3 est alimentée en fluide d'une façon analogue par des orifices 5' régulièrement répartis et reliés par des canaux 51' à des collecteurs 52'.

Cependant, pour permettre de légers ajustements en position de chaque patin 3 par rapport à l'arbre 1, chaque collecteur 52' est relié à un conduit d'alimentation en fluide 53' par deux canaux 54, 55, ménagés dans le prolongement l'un de l'autre, respectivement dans la partie en saillie 14 et dans le patin 3 et reliés entre eux par un organe de jonction susceptible de suivre de légers déplacements du patin 3 et constitué, par exemple, d'une douille 56 percée axialement et munie à ses extrémités de joints étanches et articulés coulissant dans des alésages correspondant ménagés au débouché des deux canaux 54, 55.

Le fluide de refroidissement, généralement de l'eau, est introduit sous pression dans les différents conduits d'alimentation 53, 53'. Il se répartit dans les collecteurs 52, 52' et est injecté par les orifices 5, 5' qui sont régulièrement répartis sur toute la surface de la face d'application 11 de l'arbre 1. Le fluide se répand ainsi entre les faces en regard 11 de l'arbre fixe 1 et 22 de la coquille 2. Cependant le trajet parcouru par chaque quantité de fluide injecté est assez court car la face d'application 11 est munie de moyens de récupération 6 régulièrement répartis sur toute sa surface et constitués avantageusement d'une série de rainures hélicoïdales 6 régulièrement espacées de façon à passer entre les rangées d'orifices 5 et qui sont reliées à un circuit d'évacuation 63.

Par exemple, comme on le voit sur les figures 4 et 7, les rainures 6 peuvent être munies d'orifices espacés 60 qui débouchent dans des canaux 61 reliés en faisceaux à des collecteurs 62 débouchant dans un conduit d'évacuation 63 qui peut être constitué d'un conduit unique d'assez grand diamètre ménagé dans l'axe de l'arbre 1.

Chaque patin 3 est également muni de rainures hélicoïdales 6' qui s'étendent dans le prolongement des rainures correspondantes 6 de la face d'application 11. Aux extrémités 64 de ces rainures placées au niveau des flasques 13, 13' sont ménagés des orifices latéraux 60' qui sont reliés à des collecteurs 62' par des canaux 61' ménagés dans les deux flasques 13, 13' (Figure 7).

Grâce à ces dispositions, il est possible d'injecter sous pression, par les orifices 5, une grande quantité d'eau qui se répand en couche mince entre la face d'application 11 de l'arbre et la face interne 21 de la coquille et est rapidement reprise par les rainures 6, 6' pour être évacuée par le conduit central 63. En raison du grand nombre d'orifices d'injection 5 ménagés sur la face d'application 11, l'eau injectée sous pression se répartit uniformément sur toute la surface de celle-ci et permet la rotation sans frottement de la coquille 2 à la façon d'un palier fluide. En outre, la chaleur appliquée de l'extérieur sur la coquille 2 est immédiatement absorbée par le film d'eau ainsi réalisé. Ce film est très mince mais en raison de la répartition des rainures 6, 6' passant entre les orifices 5, 5', chaque molécule d'eau est évacuée rapidement après avoir suivi un parcours très court sur la face d'application 11 et la quantité globale de chaleur évacuée peut être très importante.

Bien entendu, les conditions d'injection du fluide doivent être réglées en débit et en pression pour tenir compte des deux fonctions du fluide. La pression est déterminée en tenant compte de l'effort d'application de la coquille 2 sur l'arbre 1, qui est exercé par les patins 6 et le débit doit être maintenu suffisant pour assurer le refroidissement du métal par l'intermédiaire de la coquille 2.

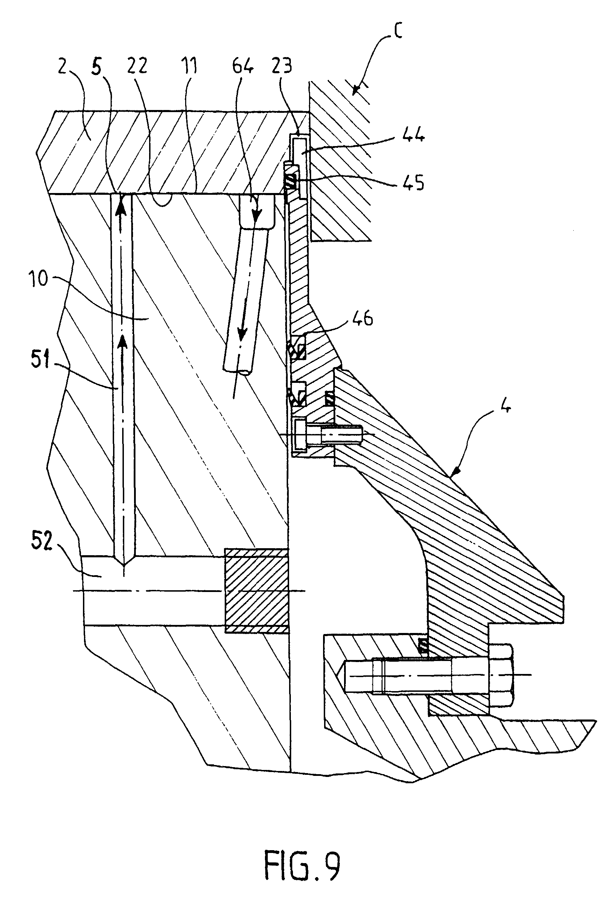

Il est à noter que, comme le montre la figure 8, les orifices d'alimentation 5 sont regroupés avantageusement par zones reliées à des circuits d'alimentation séparés 53a, 53b et associés à des moyens de réglage individuel de la pression et du débit de fluide injecté dans chaque zone. La répartition des orifices et la distribution du fluide permettent donc d'assurer un refroidissement uniforme et/ou d'ajuster l'effet de refroidissement et de palier fluide à la position de la zone correspondante dans la cavité de coulée.

Comme le montre la figure 2, pour assurer la rotation de la coquille 2, les deux flasques 4, 4' sont entraînés en synchronisme autour de l'axe x'x par un mécanisme 7 monté sur l'arbre fixe 1 et comprenant un arbre d'entraînement 70 relié à un moteur non représenté. Chacun des deux flasques 4, 4' est associé à une couronne dentée 73, 73' entraînée par un pignon moteur 71, 71', par l'intermédiaire d'un pignon monté fou 72, 72'. L'un des pignon moteur 71 est calé sur l'arbre d'entraînement 70 et l'autre pignon moteur 71' est entraîné par l'intermédiaire d'une allonge 74 passant dans un alésage de l'arbre 1 et munie à ses extrémités de joints articulés d'accouplement avec les deux pignons 71, 71'.

Comme indiqué sur la figure 9, chaque flasque circulaire 4, 4' est muni, sur sa périphérie, de parties crantées 44 qui s'engagent dans des évidements correspondants 23 ménagés sur les extrémités latérales de la coquille 2, en laissant un jeu nécessaire pour les dilations.

D'autre part, la face d'application 11 est munie, à chacune de ses extrémités, d'une rainure circulaire 64 qui reprend l'excès de fluide pour l'évacuer vers la conduite centrale 63. Pour éviter les fuites, une bague d'étanchéité 45 est logée dans une gorge périphérique de chaque flasque 4 et appliquée sur le côté latéral correspondant de la coquille 2.

De plus, un ou plusieurs joints annulaires 46 sont placés dans des gorges circulaires de chaque flasque 4, 4' et comportent une partie frottante 46' s'appuyant sur le côté latéral de la partie 10 de l'arbre fixe 1, de façon à éviter les fuites d'eau vers l'intérieur qui pourraient corroder les paliers 42 et les mécanismes d'entraînement.

Par ailleurs, la figure 9 montre schématiquement une cloison latérale C limitant l'espace de coulée du métal et qui est appliquée sur le côté de la coquille 2 avec une pression juste suffisante pour assurer l'étanchéité de la cavité de coulée sans gêner la rotation de la coquille 2. Il est à noter que celle-ci n'est soumise à aucune autre contrainte, grâce aux jeux laissés, dans le sens radial et dans le sens longitudinal, entre les crans d'entraînement 44 et les évidements correspondants 23 de la coquille.

Par rapport aux dispositions connus auparavant, l'invention présente de multiples avantages.

Tout d'abord, les déformations de la coquille sont très limitées puisqu'elle est constituée d'une enveloppe mince appliquée sur une portée cylindrique fixe par les patins opposés 3. Ces derniers sont alimentés par des circuits séparés et peuvent donc être réglés individuellement de façon à compenser les déformations de la coquille dues aux dilatations. La coquille 2 prend ainsi la forme de la portée cylindrique 11 du côté de la coulée opposé aux patins 3. La face d'application 11 peut, d'ailleurs ne pas être rigoureusement cylindrique mais avoir, au contraire, un profil légèrement incurvé, d'une façon permettant de compenser la déformation prévisible de la coquille en service sous l'effet des dilations.

Il est possible, comme on l'a vu, d'utiliser plusieurs patins adjacents 3a, 3b, 3c réglés individuellement pour répartir l'effort d'application de la coquille sur l'arbre 1.

Par ailleurs, la réalisation du dispositif est relativement simple étant donné que la seule partie mobile est constituée par la coquille 2 et les deux flasques 4, 4', et que l'ensemble est monté sur un arbre fixe dans lequel on peut, sans difficulté particulière, ménager tous les circuits d'alimentation et d'évacuation du fluide de refroidissement ainsi que les circuits hydrauliques 17 des patins et les mécanismes 7 d'entraînement en rotation de la coquille 2.

Comme on l'a représenté sur les différentes figures, ces circuits fixes d'alimentation et d'évacuation pourront être répartis à l'intérieur de la masse de l'arbre fixe 1 de façon à ne pas affaiblir celui-ci et, d'autre part, à contourner, en cas de besoin, les patins d'application 3, comme le montre notamment la figure 7.

De plus, selon une autre caractéristique avantageuse de l'invention, l'utilisation d'un arbre fixe muni d'une partie élargie 10 permet d'incorporer à l'intérieur de celui-ci certains organes accessoires.

En particulier, comme on l'a indiqué sur les figures 3 et 4, il est intéressant de loger dans le secteur de l'arbre 1 tourné vers le liquide, des moyens de brassage du métal 8 tels que des bobines électromagnétiques ou un émetteur d'ultrasons.

Un tel dispositif peut avantageusement être placé dans un logement ménagé dans la partie élargie 10 et recouvert d'une calotte 81 ayant une face circulaire 82 placée dans l'alignement de la face externe 11 et dans laquelle sont ménagés des canaux 83 débouchant vers l'extérieur par des orifices 5a répartis de la même façon que les orifices 5 de la face externe 11 pour assurer la continuité de l'alimentation en liquide.

A cet effet, les canaux 83 sont placés dans le prolongement de canaux 57 ménagés radialement dans la partie élargie 10 et débouchant soit dans un collecteur 52 soit, directement dans un conduit longitudinal d'alimentation 53.

De même, la face externe 82 de la calotte 81 est munie de rainures hélicoïdales 6a disposées dans le prolongement des rainures 6 de la face 11 de l'arbre 1.

D'autres organes accessoires pourraient aussi être adaptés au dispositif selon l'invention. En effet, celle-ci n'est évidemment pas limitée aux détails du mode de réalisation qui vient d'être décrit à titre de simple exemple et pourrait faire l'objet de variantes sans s'écarter du cadre de protection défini par les revendications.

En particulier, on a décrit l'invention dans le cas d'une machine de coulée de type connu comportant deux cylindres tournants placés en vis-à-vis mais les mêmes dispositions pourraient avantageusement être utilisées pour des machines d'un autre type comportant, par exemple, un seul cylindre tournant associé à une bande constituant l'autre paroi du moule.

D'autre part, on a décrit une disposition particulièrement avantageuse des circuits d'alimentation et d'évacuation du fluide mais d'autres moyens équivalents pourraient être employés, notamment grâce à l'utilisation d'un arbre fixe.

Par ailleurs, il est intéressant d'utiliser plusieurs patins adjacents de façon à moduler l'effort d'application de la coquille mais l'installation pourrait être simplifiée par l'emploi d'un patin unique associé à un ou plusieurs vérins.

Les signes de référence insérés après les caractéristiques techniques mentionnées dans les revendications, ont pour seul but de faciliter la compréhension de ces dernières et n'en limitent aucunement la portée.

## Revendications

1. Dispositif tournant pour la production d'un produit plat (P), par coulée d'un métal liquide sur au moins un moule rotatif (A) limité par une paroi cylindrique de révolution (2) autour d'un axe (x'x), ayant une face externe (21) et une face interne (22) et entourant un noyau fixe (1) limité par une face circulaire (11) centrée sur l'axe (x'x) et associé à des moyens (5, 6) de mise en circulation d'un fluide de refroidissement entre la face interne (22) de la paroi (2) et la face circulaire (11) du noyau (1), le métal liquide se refroidissant le long d'un secteur angulaire de la face externe (21) de la paroi cylindrique tournante (2), pour la formation d'un produit plat (P) solidifié au moins superficiellement et s'écartant de la paroi refroidie (2) suivant une direction d'extraction, caractérisé par le fait que la paroi refroidie sur laquelle est coulé le métal est constituée d'une enveloppe cylindrique mince formant une coquille (2) simplement enfilée sur la face circulaire (11) du noyau fixe qui constitue la partie centrale d'un arbre fixe (1) de maintien et de centrage de ladite coquille (2), ladite face circulaire (11) ayant un rayon sensiblement égal, au jeu de montage près, à celui de la face interne (21) de la paroi (2) et couvrant un secteur angulaire correspondant au moins au secteur angulaire de la coquille (2) sur lequel se refroidit le métal, et que l'arbre (1) est associé à des moyens d'application d'un effort de poussée sur la face interne (21) de la coquille (2), suivant une direction opposée au secteur de refroidissement du métal pour l'application de la coquille (2) sur ladite face circulaire (11) de l'arbre (1), avec interposition d'une couche de fluide de refroidissement, de façon à constituer un coussinet fixe pour le centrage de la coquille (2) sur l'arbre (1), le fluide de refroidissement assurant la lubrification dudit coussinet.

2. Dispositif de coulée tournant selon la revendication 1, caractérisé par le fait que le moyen d'application d'un effort de poussée sur la coquille (2) est constitué d'au moins un patin (3) ayant une face externe (31) couvrant un secteur circulaire de rayon sensiblement égal à celui de la face interne (21) de la coquille (2) et opposé à la face circulaire (11) de l'arbre (1), et que ledit patin (3) est monté coulissant sur l'arbre (1) suivant une direction passant par l'axe (x'x) et est associé à au moins un moyen de poussée tel qu'un vérin (34) prenant appui d'un côté sur l'arbre (1) et de l'autre sur le patin (3) pour repousser ce dernier du côté opposé à la face circulaire (11) de l'arbre (1) sur laquelle est appliquée la coquille (2), une couche de fluide de refroidissement étant interposée entre la face interne (22) de la coquille (2) et la face externe (31) du patin (3) qui constitue ainsi un coussinet mobile, coopérant avec le coussinet fixe constitué par la face circulaire (11) de l'arbre fixe pour le centrage de la coquille (2).

3. Dispositif de coulée tournant selon la revendication 2, caractérisé par le fait qu'il comprend des moyens de réglage de l'effort exercé par chaque vérin (34) sur le patin (3) correspondant de façon à déterminer un effort d'application de la coquille (2) sur l'arbre (1) susceptible de compenser la déformation de la coquille (2) due aux dilatations différentielles entre la face interne (22) et la face externe (21) de celle-ci.

4. Dispositif de coulée tournant selon la revendication 3, caractérisé par le fait qu'il comprend au moins deux patins (3a, 3b) placés l'un à côté de l'autre sur la longueur de la coquille (2) et associés à des moyens séparés (17a, 17b) de réglage individuel de l'effort de poussée exercé par chacun des patins (3a, 3b) sur la partie correspondante de la coquille (2).

5. Dispositif de coulée tournant selon l'une des revendications précédentes, caractérisé par le fait que les deux faces d'application, respectivement fixe (11) et mobile (31), formant les coussinets sont munies chacune d'une pluralité d'orifices (5, 5') répartis sur chaque face (11) (31) et reliés, individuellement ou par groupes, à au moins un circuit (53) (53') d'alimentation en fluide sous pression ménagé à l'intérieur de l'arbre fixe (1).

6. Dispositif de coulée tournant selon la revendication 5, caractérisé par le fait que les deux faces d'application formant un coussinet, respectivement fixe (11) et mobile (31), sont munies chacune de moyens (6) de récupération du fluide reliés à au moins un circuit d'évacuation (63) ménagé à l'intérieur de l'arbre fixe (1).

7. Dispositif de coulée tournant selon la revendication 6, caractérisé par le fait que les moyens (6) de récupération du fluide comprennent une pluralité d'orifices (60, 60') répartis sur la face d'application (11, 31) et reliés, individuellement ou par groupes, à au moins un circuit d'évacuation (62, 63).

8. Dispositif de coulée tournant selon l'une des revendications 6 et 7, caractérisé par le fait que les orifices d'alimentation en fluide (5) sont disposés en plusieurs zones réparties sur la largeur de la cavité de coulée et distribuées de telle sorte que la circulation du fluide entre chaque orifice d'alimentation (5) et les moyens de récupération (6) correspondants, assure le refroidissement du produit coulé tout le long de la coquille (2).

9. Dispositif de coulée tournant selon la revendication 8, caractérisé par le fait que les orifices d'alimentation (5) de chaque zone sont reliés à un circuit d'alimentation séparé (53a, 53b) muni de moyens de réglage individuel de la pression et du débit du fluide injecté dans chaque zone.

10. Dispositif de coulée tournant selon l'une des revendications 6 à 9, caractérisée par le fait que les moyens de récupération ménagés sur chaque face d'application (11, 31) formant un coussinet de la coquille (2) comprennent au moins une rainure (6) couvrant au moins un secteur dudit coussinet et dans laquelle débouche au moins un orifice d'évacuation (60) relié par un canal (61) à un conduit (63) d'évacuation du fluide ménagé à l'intérieur de l'arbre fixe (1).

11. Dispositif de coulée tournant selon l'une des revendications 2 à 10, caractérisé par le fait que la face circulaire (31) du patin (3) s'étend axialement sur au moins une partie de la longueur de la coquille (2) et couvre un secteur angulaire inférieur à 180° et que la face circulaire (11) de l'arbre (1) couvre un secteur angulaire complémentaire de façon à former, avec la face circulaire (31) du patin (3), une face cylindrique couvrant toute la circonférence, sur laquelle est enfilée la coquille (2).

12. Dispositif de coulée tournant selon la revendication 11, caractérisé par le fait que la face d'application (11) de la coquille (2) est ménagée sur une partie élargie (10) de l'arbre (1) et que celle-ci est munie, du côté opposé au métal coulé, d'un évidement (12) à l'intérieur duquel est logé au moins un patin (3) d'application de la coquille (2), dont la face externe (31) constitue le coussinet mobile.

13. Dispositif de coulée tournant selon la revendication 12, caractérisé par le fait que l'évidement (12) ménagé dans l'arbre fixe (1) est limité, dans le sens axial, par deux flasques latéraux (13, 13') de maintien du patin (3) et, dans le sens radial, par une face d'appui (15) dans laquelle est ménagée au moins une partie en saillie (14) qui s'enfile dans un logement (32) correspondant du patin, chaque partie en saillie (14) et le logement (32) correspondant constituant des moyens de guidage du patin suivant une direction radiale, perpendiculaire à l'axe (x', x).

14. Dispositif de coulée tournant selon la revendication 13, caractérisé par le fait que chaque patin (3) est associé à au moins un vérin comprenant un piston (34) prenant appui sur la face d'extrémité (15') de la partie en saillie (14) et monté coulissant de façon étanche dans un alésage (35) ménagé dans le fond du logement (32) du patin (3).

15. Dispositif de coulée tournant selon la revendication 14, caractérisé par le fait que chaque patin (3) présente un profil rectangulaire allongé et est associé à un vérin unique, le piston (34) et l'alésage (35) ayant une section oblongue à extrémités arrondies de façon à couvrir la plus grande partie du fond du logement (32) à section rectangulaire.

16. Dispositif de coulée tournant selon l'une des revendications 14 et 15, caractérisé par le fait que le piston (34) est constitué d'une plaque indépendante prenant appui sur la face d'extrémité (15') de la partie en saillie (14).

17. Dispositif de coulée tournant selon l'une des revendications précédentes, caractérisé par le fait que la face d'application fixe (11) ménagée sur l'arbre (1) du côté de la coulée présente un profil non rigoureusement cylindrique, susceptible de compenser la déformation prévisible de la coquille (2) en service.

18. Dispositif de coulée tournant selon l'une des revendications précédentes, caractérisé sur le fait qu'il comprend des organes accessoires (8) logés à l'intérieur de l'arbre fixe, tels que des moyens de brassage du métal par effet magnétique ou ultrasons.

19. Dispositif de coulée tournant selon l'une des revendications précédentes, caractérisé sur le fait que la coquille (2) est maintenue axialement, avec possibilité de jeu radial, par deux flasques circulaires (4, 4') montés rotatifs sur l'arbre fixe (1), chacun par l'intermédiaire d'un palier (41, 42), et ayant chacun un bord externe circulaire de maintien de l'extrémité latérale correspondante de la paroi (2), avec interposition d'au moins un joint d'étanchéité annulaire (46) entre ladite extrémité latérale de la paroi (2) et la partie élargie (10) de l'arbre fixe (1).

20. Dispositif de coulée tournant selon la revendication 19, caractérisé par le fait qu'au moins l'un des flasques d'extrémité (4) est solidarisé en rotation avec la coquille (2) par des moyens d'accouplement avec jeu (44, 23) permettant les dilatations différentielles, ledit flasque (4) étant relié cinématiquement à un moyen de commande de rotation (7) porté par l'arbre (1) pour l'entraînement en rotation de la coquille (2) autour de son axe (x', x).

21. Dispositif de coulée tournant selon la revendication 19, caractérisé par le fait qu'un joint d'étanchéité annulaire (45) est interposé entre le bord externe de chaque flasque (4, 4') et le côté latéral correspondant de la coquille (2).

## Patentansprüche

1. Stranggießdrehvorrichtung zur Erzeugung von Flachstahl (P) durch Giessen von Flüssigmetall auf mindestens einer drehbaren Form (A), die durch eine zylindrische um eine Achse (x'x) sich drehende, eine Aussenfläche (21) und eine Innenfläche (22) aufweisende und einen feststehenden Kern (1) umgebende Wand (2) begrenzt ist, welcher durch eine kreisförmige auf die Achse (x'x) ausgerichtete Fläche (11) begrenzt ist und dem Mittel (5, 6) zum Umwälzen eines Kühlmediums zwischen der Innenfläche (22) der Wand (2) und der kreisförmigen Fläche (11) des Kerns (1) zugeordnet sind, wobei sich das Flüssigmetall entlang eines Winkelsektors der Aussenfläche (21) der zylindrischen Drehwand (2) zur Bildung von mindestens oberflächlich erstarrtem Flachstahl (P) abkühlt, der von der gekühlten Wand (2) gemäß einer Abzugsrichtung abkommt, dadurch gekennzeichnet, daß die den Metallabguß aufnehmende gekühlte Wand aus einem dünnen als Schale (2) ausgebildeten Zylindermantel besteht, die einfach auf die kreisförmige Fläche (11) des feststehenden Kerns aufgesetzt ist, der das Mittelteil einer fixen Welle (1) zum Halten und Zentrieren dieser Schale (2) bildet, wobei diese kreisförmige Fläche (11) einen bis auf das Einbauspiel im wesentlichen dem der Innenfläche (21) entsprechenden Radius aufweist und einen mindestens dem Winkelsektor der Schale (2) entsprechenden Winkelsektor abdeckt, auf dem sich das Metall abkühlt, und daß der Welle (1) Mittel zum Beaufschlagen einer Schubkraft auf die Innenfläche (21) der Schale (2) gemäß einer dem Metallkühlungssektor entgegengesetzten Richtung zum Andrücken der Schale (2) an diese kreisförmige Fläche (11) der Welle (1) unter Einbringen einer Kühlmediumsschicht zugeordnet sind, um somit ein feststehendes Lager für die Zentrierung der Schale (2) auf der Welle (1) zu bilden, wobei das Kühlmedium die Schmierung dieser Lagerbüchse gewährleistet.

2. Stranggießdrehvorrichtung nach Anspruch 1, dadurch gekennzeichnet, daß das Mittel zur Beaufschlagung einer Schubkraft auf die Schale (2) aus mindestens einer Gleitkufe (3) mit einer Aussenfläche (31) besteht, die einen kreisförmigen Sektor mit einem im wesentlichen dem der Innenfläche (21) der Schale (2) entsprechenden Radius abdeckt und der kreisförmigen Fläche (11) der Welle (1) entgegengesetzt ist, und daß diese Gleitkufe (3) gemäß einer die Achse (x'x) schneidenden Richtung auf der Welle (1) gleitend montiert ist und mindestens einem Schubmittel, etwa einem Hubzylinder (34), zugeordnet ist, das auf einer Seite auf der Welle (1) und auf der anderen Seite auf der Gleitkufe (3) abgestützt ist, um letztere auf der der kreisförmigen Fläche (11) der Welle (1) entgegengesetzten Seite abzustossen, auf welcher die Schale (2) aufsitzt, wobei zwischen die Innenfläche (22) der Schale (2) und die Aussenfläche (31) der Gleitkufe (3) eine Kühlmediumsschicht eingebracht ist, die somit ein bewegliches Lager bildet, das mit dem durch die kreisförmige Fläche (11) der feststehenden Welle für die Zentrierung der Schale (2) bestehenden fixen Lager zusammenwirkt.

3. Stranggießdrehvorrichtung nach Anspruch 2, dadurch gekennzeichnet, daß sie Einstellmittel für die durch jeden Hubzylinder (34) auf die entsprechende Gleitkufe (3) beaufschlagte Kraft umfaßt, um somit eine Beaufschlagungskraft der Schale (2) auf die Welle (1) zu bestimmen, die geeignet ist, die auf die Differentialdehnungen zwischen der Innenfläche (22) und der Aussenfläche (21) derselben zurückzuführende Verformung der Schale (2) zu kompensieren.

4. Stranggießdrehvorrichtung nach Anspruch 3, dadurch gekennzeichnet, daß sie mindestens zwei nebeneinander über die Länge der Schale (2) angeordnete Gleitkufen (3a, 3b) aufweist, die getrennten Mitteln (17a, 17b) zur individuellen Einstellung der durch die jeweilige Gleitkufe (3a, 3b) auf das entsprechende Teil der Schale (2) wirkenden Schubkraft zugeordnet sind.

5. Stranggießdrehvorrichtung nach einem der vorstehenden Ansprüche, dadurch gekennzeichnet, daß die beiden als Lager ausgebildeten Beaufschlagungsflächen, d.h. die feste (11) und die bewegliche (31), jeweils eine Mehrzahl über jede Fläche (11, 31) verteilte Öffnungen (5, 5') aufweisen, die einzeln oder gruppenweise an mindestens einen innen in der feststehenden Welle (1) angeordneten Versorgungskreis (53, 53') zum Versorgen mit Druckmedium angeschlossen sind,

6. Stranggießdrehvorrichtung nach Anspruch 5, dadurch gekennzeichnet, daß jede der beiden ein festes (11) bzw. ein bewegliches (31) Lager bildenden Beaufschlagungsflächen Mittel (6) für den Mediumrücklauf aufweist, die an mindestens einem innen in der feststehenden Welle (1) angeordneten Ablaufkreis (63) angeschlossen sind.

7. Stranggießdrehvorrichtung nach Anspruch 6, dadurch gekennzeichnet, daß die Mittel (6) für den Mediumrücklauf eine Mehrzahl über die Beaufschlagungsflächen (11, 31) verteilte Öffnungen (60, 60') aufweisen, die einzeln oder gruppenweise an mindestens einem Ablaufkreis (62, 63) angeschlossen sind.

8. Stranggießdrehvorrichtung nach einem der Ansprüche 6 und 7, dadurch gekennzeichnet, daß die Mediumversorgungsöffnungen (5) in mehreren über die Breite des Gießhohlraums aufgeteilte Zonen angeordnet und derart verteilt sind, daß der Mediumumlauf zwischen jeder Versorgungsöffunung (5) und den entsprechenden Rücklaufmitteln (6) die Kühlung des entlang der Schale (2) gegossenen Metalls gewährleistet.

9. Stranggießdrehvorrichtung nach Anspruch 8, dadurch gekennzeichnet, daß die Versorgungsöffnungen (5) jeder Zone an einem getrennten Versorgungskreis (53a, 53b) mit individuellen Druck- und Durchsatz-Einstellmitteln für das in jede Zone eingespeisten Mediums angeschlossen sind.

10. Stranggießdrehvorrichtung nach einem der Ansprüche 6 bis 9, dadurch gekennzeichnet, daß die Rücklaufmittel auf jeder ein Lager der Schale (2) bildenden Beaufschlagungsfläche (11, 31) mindestens eine Nut (6) aufweisen, die mindestens einen Sektor dieses Lagers abdeckt und in welche eine Ablauföffnung (60) mündet, die über einen Kanal (61) an einer innen in der feststehenden Welle (1) angeordneten Medium-Ablaufleitung (63) angeschlossen ist.

11. Stranggießdrehvorrichtung nach einem der Ansprüche 2 bis 10, dadurch gekennzeichnet, daß sich die Beaufschlagungsfläche (31) der Gleitkufe (3) über mindestens einen Teil der Länge der Schale (2) in Axialrichtung erstreckt und einen Winkelsektor von kleiner als 180° abdeckt und daß die Beaufschlagungsfläche (11) der Welle (1) einen komplementären Winkelsektor derart abdeckt, daß mit der Beaufschlagungsfläche (31) der Gleitkufe (3) eine den gesamten Umfang abdeckende Zylinderfläche gebildet wird, auf die die Schale (2) aufgesetzt ist.

12. Stranggießdrehvorrichtung nach Anspruch 11, dadurch gekennzeichnet, daß die Beaufschlagungsfläche der Schale (2) auf einem erweiterten Teil (10) der Welle (1) angeordnet ist, und daß diese auf der dem flüssigen Metall entgegengesetzten Seite eine Aussparung (12) aufweist, in welcher mindestens eine Gleitkufe (3) zur Beaufschlagung der Schale (2) untergebracht ist, wobei deren Aussenfläche (3) das bewegliche Lager bildet.

13. Stranggießdrehvorrichtung nach Anspruch 12, dadurch gekennzeichnet, daß die in der feststehenden Welle (1) angeordnete Aussparung (12) in Axialrichtung durch zwei seitliche Halteflansche (13, 13') der Gleitkufe (3) und in Radialrichtung durch eine Stützfläche (15) begrenzt ist, in welcher mindestens ein vorspringendes Teil (14) angeordnet ist, das in eine entsprechende Aufnahme (32) der Gleitkufe eingreift, wobei jedes vorspringende Teil (14) und die entsprechende Aufnahme (32) Führungsmittel der Gleitkufe gemäß einer senkrecht zur Achse (x'x) verlaufenden Radialrichtung bilden.

14. Stranggießdrehvorrichtung nach Anspruch 13, dadurch gekennzeichnet, daß jede Gleitkufe (3) mindestens einem Hubzylinder zugeordnet ist, der einen auf der Endfläche (15') des vorspringenden Teils (14) sich abstützenden Kolben (34) aufweist, der abdichtend in einer am Boden der Aufnahme (32) der Gleitkufe (3) befindlichen Bohrung (35) gleitbar montiert ist.

15. Stranggießdrehvorrichtung nach Anspruch 14, dadurch gekennzeichnet, daß jede Gleitkufe (3) ein gestrecktes Rechteckprofil aufweist und einem einzigen Hubzylinder zugeordnet ist, wobei der Kolben (34) und die Bohrung (35) zur Abdeckung des grössten Teils des Bodens der Aufnahme (32) mit Rechteckquerschnitt einen länglichen Querschnitt mit abgerundeten Enden aufweisen.

16. Stranggießdrehvorrichtung nach einem der Ansprüche 14 bis 15, dadurch gekennzeichnet, daß der Kolben (34) aus einer unabhängigen auf einer Endfläche (15') des vorspringenden Teils (14) sich abstützenden Platte besteht.

17. Stranggießdrehvorrichtung nach einem der vorstehenden Ansprüche, dadurch gekennzeichnet, daß die auf der Welle (1) gießseitig befindliche feste Beaufschlagungsfläche (11) ein nicht genau zylindrisches Profil aufweist, welche die vorhersehbare Verformung der in Betrieb befindlichen Schale (2) kompensieren kann.

18. Stranggießdrehvorrichtung nach einem der vorstehenden Ansprüche, dadurch gekennzeichnet, daß sie innen in der feststehenden Welle untergebrachte Nebeneinrichtungen (8) wie Mittel zum Durchmischen des Metalls durch Magnetwirkung oder Ultraschall aufweist.

19. Stranggießdrehvorrichtung nach einem der vorstehenden Ansprüche, dadurch gekennzeichnet, daß die Schale (2) in Axialrichtung mit möglichem Radialspiel durch zwei auf der feststehenden Welle (1) jeweils über ein Lager (41, 42) drehbar montierte kreisförmige Wangen (4, 4') gehalten wird, die jeweils einen kreisförmigen Aussenrand zum Festhalten des entsprechenden Seitenendes der Wand (2) unter Dazwischenschaltung mindestens einer kreisförmigen Dichtung (46) zwischen diesem Seitenende der Wand (2) und dem erweiterten Teil (10) der feststehenden Welle (1) umfassen.

20. Stranggießdrehvorrichtung nach Anspruch 19, dadurch gekennzeichnet, daß mindestens eine der Endwangen (4) über Kupplungsmittel mit die Differentialdehnungen ermöglichendem Spiel (44, 23) mit der Schale (2) drehbar verbunden ist, wobei zum drehbaren Antrieb der Schale (2) um deren Achse (x', x) diese Wange (4) an ein auf der Welle (1) abgestütztes Rotationssteuermittel (7) kinematisch angeschlossen ist.

21. Stranggießdrehvorrichtung nach Anspruch 19, dadurch gekennzeichnet, daß zwischen dem Aussenrand jeder Wange (4, 4') und der entsprechenden Seitenfläche der Schale (2) eine ringförmige Dichtung (45) angeordnet ist.

## Claims

1. A rotary device for producing a flat product (P) by casting a liquid metal on at least a rotary mould (A) limited by a revolution cylindrical wall (2) around an axis (x'x) having an outer surface (21) and an inner surface (22) and surrounding a fixed core (1) limited by a circular surface (11) centred on the axis (x'x) and associated with means (5, 6) to provide a cooling fluid circulation between the inner surface (22) of the wall (2) and the circular surface (11) of the core (1), the liquid metal being cooled along an angular sector of the outer surface (21) of the rotary cylindrical wall (2), in order to obtain a flat product (P) at least superficially solidified and distant of the cooled wall (2) along the extraction direction, characterised in that the cooled wall on which the metal is cast is made of a thin cylindrical envelope forming a shell (2) simply inserted on the circular surface (11) of the fixed core which provides the central section of a fixed shaft (1) to hold and centre said shell (2), said circular surface (11) having a radius substantially equal, down to the assembly clearance, to that of the inner surface (21) of the wall (2) and covering an angular sector corresponding at least to the angular sector of the shell (2) on which the metal is cooled and in that the shaft (1) is connected to thrust load application means on the inner surface (21) of the shell (2) according to a direction opposite to the metal cooling sector for the application of the shell (2) onto said circular surface (11) of the shaft (1) with interposition of a cooling fluid layer in order to provide a fixed bush for the centering of the shell (2) onto the shaft (1), the cooling fluid providing lubrication of said bush.

2. A rotary device according to claim 1, charaterised in that the thrust load application means onto the shell (2) comprises at least a pad (3) having an outer surface (31) covering a circular sector of radius substantially equal to that of the inner surface (21) of the shell (2) and opposite to the circular surface (11) of the shaft (1) and in that said pad (3) is sliding mounted onto the shaft (1) according to a direction passing through the axis (x'x) and is connected at least to a thrust means such as a jack (34) bearing on a side onto the shaft (1) and on the other side onto the pad (3) to push said latter on the side opposite to the circular surface (11) of the shaft (1) on which is applied the shell (2), a cooling fluid layer being interposed between the inner surface (22) of the shell (2) and the outer surface (31) of pad (3) which thus provides a moveable bush co-operating with the fixed bush made by the circular surface (11) of the fixed shaft for centring the shell (2).

3. A rotary casting device according to claim 2, characterised in that it comprises means to adjust the load exerted by each jack (34) on the corresponding pad (3) in order to determine an application load of the shell (2) on the shaft (1) liable to compensate for the deformation of the shell (2) further to the differential expansions between the inner surface (22) and the outer surface (21) of the former.

4. A rotary casting device according to claim 3, characterised in that it comprises at least two pads (3a, 3b) located one close to another over the length of the shell (2) and associated with separate individual adjustment means (17a, 17b) of the thrust load exerted by each of the pads (3a, 3b) on the corresponding part of the shell (2).

5. A rotary casting device according to any of the previous claims, characterised in that both application surfaces, respectively fixed (11) and mobile (31), forming the bushes, are each fitted with a number of openings (5, 5') distributed over each face (11) (31) and linked individually or in groups, to at least one pressurised fluid supply system (53) (53') arranged inside the fixed shaft (1).

6. A rotary casting device according to claim 5, characterised in that both application surfaces forming a bush, respectively fixed (11) and mobile (31), are each fitted with means (6) for collecting the fluid, connected to at least one exhaust system (63) arranged inside the fixed shaft (1).

7. A rotary casting device according to claim 6, characterised in that the means (6) for collecting the fluid comprise a number of openings (60, 60') distributed over the application surface (11, 31) and linked, individually or in groups, to at least one exhaust system (62, 63).

8. A rotary casting device according to either of claims 6 or 7, characterised in that the fluid supply openings (5) are arranged in several zones provided over the width of the casting cavity and distributed in such a way that the fluid circulation between each supply opening (5) and the corresponding collection means (6), ensures the cooling of the product cast along the shell (2).

9. A rotary casting device according to claim 8, characterised in that the supply openings (5) of each zone are linked to a separate supply system (53a, 53b) fitted with individual means for the adjustment of the pressure and of the flow rate of the fluid injected into each zone.

10. A rotary casting device according to any of the claims 6 to 9, characterised in that the collection means arranged on each application surface (11, 31) forming a bush of the shell (2) comprise at least one groove (6) covering at least one sector of the said bush and in which arrives at least one exhaust opening (60) linked by a channel (61) to a fluid exhaust duct (63) arranged inside the fixed shaft (1).

11. A rotary casting device according to any of claims 2 to 10, characterised in that the circular surface (31) of pad (3) extends axially over at least part of the length of the shell (2) and covers an angular sector less than 180° and in that the circular surface (11) of the shaft (1) covers an additional angular sector in order to provide with the circular surface (31) of the pad (3), a cylindrical surface covering the whole circumference on which is inserted the shell (2).

12. A rotary casting device according to claim 11, characterised in that the application surface (11) of the shell (2) is arranged on a widened section (10) of the shaft (1) and that the said widened section is fitted, on the side opposite to the metal cast, with a recess (12) inside which is lodged at least one pad (3) for the application of the shell (2), whose outer surface (31) constitutes a moveable bush.

13. A rotary casting device according to claim 12, characterised in that the recess (12) arranged in the fixed shaft (1) is limited, axially, by two side flanges (13, 13') for retaining the pad (3) and, in the radial direction, by a bearing surface (15) in which has been arranged at least one protruding section (14) threading into a corresponding housing (32) of the pad, whereby each protruding section (14) and the corresponding housing (32) constitute guiding means for the pad along a radial direction, perpendicular to the axis (x', x).

14. A rotary casting device according to claim 13, characterised in that each pad (3) is associated at least one jack comprising a piston (34) bearing on the end surface (15') of the protruding section (14) and mounted to slide tightly into a bore (35) arranged in the bottom of the housing (32) of the pad (3).

15. A rotary casting device according to claim 14, characterised in that each pad (3) has an oblong rectangular profile and is associated with a single jack, whereby the piston (34) and the bore (35) having an oblong section with rounded ends in order to cover the largest portion of the bottom of the housing (32) with a rectangular section.

16. A rotary casting device according to either of claims 14 or 15, characterised in that the piston (34) is made of an independent plate bearing on the end surface (15') of the protruding section (14).

17. A rotary casting device according to any of the previous claims, characterised in that the fixed application surface (11) arranged on the shaft (1) on the casting side has a profile which may not be strictly cylindrical, liable to compensate for the foreseeable deformation of the shell (2) during operation.

18. A rotary casting device according to one of the previous claims, characterised in that it comprises accessories means (8) housed inside the fixed shaft, such as metal mixing means by magnetic action or ultrasound.

19. A rotary casting device according to any of the previous claims, characterised in that the shell (2) is maintained axially with possible radial gap, by two circular flanges (4, 4') mounted to rotate on the fixed shaft (1), each via a bearing (41, 42) and each provided with a circular external edge for maintaining the corresponding lateral end of the wall (2), at least an annular sealing joint (46) being interposed between said lateral end of the wall (2) and the widened portion (10) of the fixed shaft (1).

20. A rotary casting device according to claim 19, characterised in that in rotation the shell (2) is linked with at least one of the end flanges (4) by coupling means with clearances (44, 23) enabling differential expansions, whereby the said flange (4) is kinetically bound to a rotation control means (7) carried by the shaft (1) to drive the shell (2) into rotation around its axis (x', x).

21. A rotary casting device according to claim 19, characterised in that an annular sealing joint (45) is interposed between the outer edge of each flange (4, 4') and the corresponding lateral side of the shell (2).
